(19) Europäisches Patentamt
European Patent Office
Office européen des brevets

(11) **EP 1 937 021 A2**

(12) **EUROPÄISCHE PATENTANMELDUNG**

(43) Veröffentlichungstag:
**25.06.2008 Patentblatt 2008/26**

(51) Int Cl.:
***H04Q 7/38*** *(2006.01)*

(21) Anmeldenummer: **07024431.4**

(22) Anmeldetag: **17.12.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **18.12.2006 DE 102006059662**
**25.10.2007 DE 102007051137**

(71) Anmelder: **Björn Steiger Stiftung Service GmbH**
**70174 Stuttgart (DE)**

(72) Erfinder:
• **Jung, Peter, Prof. Dr.-Ing.**
**47051 Duisburg (DE)**
• **Waadt, Andreas, Dipl.-Ing.**
**47057 Duisburg (DE)**
• **Bruck, Guido H, Dr.-Ing.**
**46562 Duisburg (DE)**

(74) Vertreter: **Zinkler, Franz et al**
**Schoppe, Zimmermann, Stöckeler & Zinkler**
**Postfach 246**
**82043 Pullach bei München (DE)**

(54) **Vorrichtung und Verfahren zur Positionsbestimmung eines Mobilfunkendgerätes**

(57) Eine Vorrichtung (100) zur Positionsbestimmung eines Mobilfunkendgerätes, mit einer Einrichtung (110) zum Liefern von Empfangspegelmessungen einer Mehrzahl von Basisstations-Sende-Empfängern, wobei ein Basisstations-Sende-Empfänger eine Basisstations-Sende-Empfänger-Position aufweist. Die Vorrichtung (100) zur Positionsbestimmung eines Mobilfunkendgerätes weist ferner eine Einrichtung (120) zum Bestimmen der Position des Mobilfunkendgerätes basierend auf einer Kombination der Basisstations-Sende-Empfänger-Positionen auf.

FIG.1

**Beschreibung**

Die vorliegende Erfindung bezieht sich auf die Lokalisierung von Mobilfunktelefonen bzw. Mobilfunkendgeräten in Mobilfunknetzwerken, insbesondere in Notfallsituationen.

Die Lokalisierung von Mobilfunktelefonen, insbesondere wenn diese nicht über einen eingebauten GPS-Empfänger (GPS = Global Positioning System) verfügen bzw. keine GPS-Abdeckung vorhanden ist, erfolgt in der konventionellen Technik durch Auswertung der Informationen, die durch die Verbindung der Mobilfunktelefone mit dem Mobilfunknetz und dessen Netzwerkinfrastruktur gewonnen werden können. Im Bereich der konventionellen Technik kann die Lokalisierung durch Auswertung einer Position eines Sendemastes einer Funkzelle vorgenommen werden, in die ein Mobilfunktelefon eingebucht ist. Manche Funkzellen sind durch sektorisierte Antennen gekennzeichnet, wobei in diesen Fällen das virtuelle Zentrum eines Sektors als Position des Mobilfunktelefons angegeben werden kann, in dem das Mobilfunktelefon eingebucht ist.

Diese Vorgehensweise erlaubt eine Positionsbestimmung eines Mobilfunktelefons, bzw. eines Mobilfunkendgerätes, nur mit einer eingeschränkten Genauigkeit. Dies ist insbesondere nachteilig in Situationen, in denen Notfälle auftreten und ein zeitnahes Eintreffen von Rettungskräften unabdinglich ist.

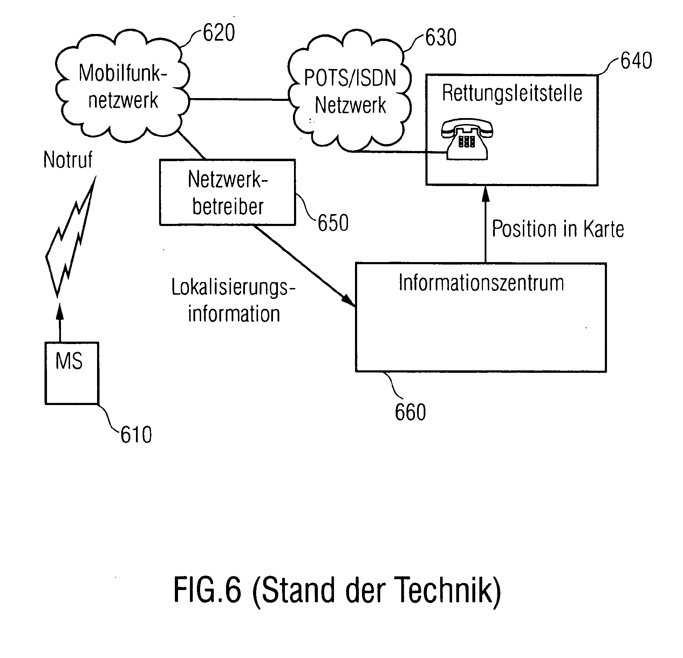

In der Fig. 6 ist ein Kommunikationsszenario in einer Notfallsituation beispielhaft dargestellt. Die Fig. 6 zeigt die Nutzung eines Lokalisierungsdienstes am Beispiel einer Alarmierung von Rettungsdiensten. In der Fig. 6 ist ein Mobilfunktelefon 610 (MS = Mobilstation) dargestellt, von dem aus ein Notruf (Emergency Call) ausgesendet wird, der über ein drahtloses Mobilfunknetz (PLM Network = Public Land Mobile Network) 620 und ein drahtgebundenes Netz 630, das durch ein POTS-Netzwerk (POTS = Plain Old Telephone Service bzw. Post Office Telephone Service) oder ein ISDN-Netzwerk (ISDN = Integrated Services Digital Network) realisiert sein kann, an eine Rettungsleitstelle 640 (Emergency Center) weitervermittelt wird. Durch eine Nutzung bisheriger konventioneller Location Services eines Netzwerkbetreibers 650 (PLMN Operator), wird eine Lokalisierungsinformation (Location Information from LBS, LBS = Location Based Services) an ein Informationszentrum 660 (IT-Center, IT = Information Technology) weitergegeben, das durch eine geeignete Software der Rettungsleitstelle 640 die berechnete Position des Mobilfunktelefons 610 auf einer Karte anzeigen kann (Location on Map), damit die Rettungskräfte an den richtigen Ort geleitet werden können.

Ein Nachteil der bisherigen Lösung ist die nur eingeschränkte Genauigkeit, mit der die Position eines Mobilfunktelefons oder Mobilfunkendgerätes bestimmt werden kann, so dass es zu Verzögerungen beim Einsatz der Rettungskräfte kommt, wobei dies gerade im Bereich der Notfälle schwerwiegende Konsequenzen nach sich ziehen kann.

Die DE 10345224 offenbart ein Verfahren zur Positionsschätzung einer Teilnehmerstation eines Funkkommunikationssystems, bei dem eine Empfangsstation von der Teilnehmerstation Berichte empfängt, die jeweils eine Information bezüglich einer Signalstärke eines Empfangssignals wenigstens einer sendenden Station am Ort der Teilnehmerstation enthalten. Die Berichte werden in einem Speicher einer Netzeinrichtung des Funkkommunikationssystems gespeichert und eine Positionsbestimmung berücksichtigt zumindest zwei vor der Aufforderung zur Positionsschätzung gespeicherte Berichte zur Positionsschätzung der Teilnehmerstation. Die Position der Teilnehmerstation kann dann durch Vergleich der Signalstärken mit einer Signalstärkendatenbank ermittelt werden. Das beschriebene Verfahren hat den Nachteil, dass die Position der Teilnehmerstation nur so genau bestimmt werden kann, wie es die Auflösung der Datenbank erlaubt. Ferner muss die Datenbank ausgemessen und gespeichert, bei Ausbau eines Netzes entsprechend aktualisiert werden. Eine Positionsbestimmung ist damit nur ungenau möglich.

Die WO 98/15149 offenbart ein Verfahren zur Positionsbestimmung einer Mobilstation in einem zellularen Netzwerk. Ein Netzwerkmanagementsystem empfängt dabei von einer Mobilstation Informationen über Feldstärkemessungen, die von der Mobilstation durchgeführt wurden. In einem nächsten Schritt werden die Feldstärkemessungen mit einer Feldstärkematrix verglichen, und die Position der Mobilstation, basierend auf den Koordinaten der Feldstärkematrix, zumindest in Relation zu der Basisstation, bei der die Mobilstation angemeldet ist und einer weiteren Basisstation, geschätzt. Dabei wird die Feldstärkemessung der Mobilstation möglichst genau an die Feldstärkeinformation in der Feldstärkematrix angepasst. Das hier beschriebene Verfahren hat den Nachteil, dass die Position nur ungenau bestimmt werden kann, da in der Feldstärkematrix nur Werte an bestimmten Orten vorliegen, die durch eine Messung ermittelt wurden. Ferner hat das beschriebene Verfahren den Nachteil, dass die Aktualisierung der Feldstärkematrix zusätzlichen Aufwand erzeugt.

Es ist die Aufgabe der vorliegenden Erfindung eine genauere und verbesserte Bestimmung einer Position eines Mobilfunkendgerätes zu ermöglichen, insbesondere in Notfallsituationen.

Diese Aufgabe wird gelöst durch eine Vorrichtung zur Positionsbestimmung eines Mobilfunkendgerätes gemäß Anspruch 1 und ein Verfahren zur Positionsbestimmung eines Mobilfunkendgerätes gemäß Anspruch 24.

Die Aufgabe wird gelöst durch eine Vorrichtung zur Positionsbestimmung eines Mobilfunkendgerätes mit einer Einrichtung zum Liefern von Empfangspegelmessungen einer Mehrzahl von Basisstations-Sende-Empfängern, wobei ein Basisstations-Sende-Empfänger eine Basisstations-Sende-Empfänger-Position aufweist. Die Vorrichtung zur Positionsbestimmung umfasst ferner eine Einrichtung zum Bestimmen der Position des Mobilfunkendgerätes basierend auf einer Kombination der Basisstations-Sende-Empfänger-Positionen.

Die Aufgabe wird ferner gelöst durch ein Verfahren zur Positionsbestimmung eines Mobilfunkendgerätes mit einem Schritt des Lieferns von Empfangspegelmessungen einer Mehrzahl von Basisstations-Sende-Empfängern, wobei ein Basisstations-Sende-Empfänger eine Basisstations-Sende-Empfänger-Position aufweist. Das Verfahren zur Positionsbestimmung umfasst ferner einen Schritt des Bestimmens der Position des Mobilfunkendgerätes basierend auf einer Kombination der Basisstations-Sende-Empfänger-Position.

Der Kerngedanke der vorliegenden Erfindung liegt in der Realisierung einer Positionsschätzung basierend auf einer Gewichtung von Senderpositionen verschiedener Sender. In einem Ausführungsbeispiel werden dabei beispielsweise ausgehend von einem Mobilfunktelefon Messungen durchgeführt, die unter in Bezugnahme einer Sendeleistung einen Rückschluss auf einen Pfadverlust zu dem jeweiligen Sender des Signals zulassen. Aus den so bestimmten Pfadverlusten kann die Position des Mobilfunktelefons geschätzt werden, indem die Positionen der Sender oder Basisstationen gemäß ihren Pfadverlusten zu dem Mobilfunktelefon gewichtet werden. Dabei kann in einem Ausführungsbeispiel die Position des Mobilfunktelefons beispielsweise hinsichtlich dreier Raumkoordinaten bestimmt werden. Ferner berücksichtigen Ausführungsbeispiele der vorliegenden Erfindung Differenzen in den Empfangspegeln, bzw. Pfadverlusten zu den einzelnen Sendern, so dass eine genauere Bestimmung der Position ermöglicht wird. Ferner berücksichtigen andere Ausführungsbeispiele der vorliegenden Erfindung eine Wahrscheinlichkeitsdichte einer Position eines Mobilfunktelefons, die sich aufgrund einer Empfangspegelmessung bestimmen lässt. Liegen mehrere solcher Wahrscheinlichkeitsdichten basierend auf mehreren Messungen an mehreren Sendern vor, so können diese zu einer Gesamtwahrscheinlichkeitsdichte überlagert werden und die Position des Mobilfunktelefons basierend auf dieser Gesamtwahrscheinlichkeitsdichte geschätzt werden.

In weiteren Ausführungsbeispielen werden neben aktuellen Empfangspegelmessungen auch solche Empfangspegel berücksichtigt, die in der Vergangenheit liegen. Basierend auf den Empfangspegelmessungen aus der Vergangenheit und den aktuellen Empfangspegelmessungen kann die Position des Mobilfunktelefons genauer bestimmt werden. In einem weiteren Ausführungsbeispiel werden Empfangspegel berücksichtigt, die in der Vergangenheit liegen und zu denen eine genaue Bestimmung der Position des Mobilfunktelefons möglich war. Ferner werden Empfangspegeländerungen berücksichtigt, so dass eine aktuelle Position relativ zu einer Position des Mobilfunktelefons in der Vergangenheit berechnet werden kann, was zu einer Erhöhung der Genauigkeit der Positionsbestimmung des Mobilfunktelefons oder Mobilfunkendgerätes beiträgt. In weiteren Ausführungsbeispielen können auch eine Geschwindigkeit des Mobilfunktelefons, Signallaufzeitmessungen zu Basisstationen, Signale verschiedener Frequenzen oder Mobilfunktechnologien berücksichtigt werden. Ausführungsbeispiele nutzen somit, insbesondere in Notfällen, Netzwerkinfrastrukturen mehrerer Betreiber, bzw. mehrerer Zugrifftechnologien aus. Beispielsweise können somit Positionen von GSM-Basisstationen (GSM = Global System for Mobile Communications), UMTS-Basisstationen (UMTS = Universal Mobil Telecommunication System), WLAN-Hotspots (WLAN = Wireless Local Area Network), oder auch anderer Sender mit bekannten Positionen in die Bestimmung der Position des Mobilfunkendgerätes miteinbezogen werden.

Ausführungsbeispiele der vorliegenden Erfindung bieten somit den Vorteil, dass eine genauere Bestimmung der Position des Mobilfunkendgerätes möglich ist und somit insbesondere in Notfällen, ein zeitnahes Eintreffen von Rettungskräften realisiert werden kann.

Bevorzugte Ausführungsbeispiele der vorliegenden Erfindung werden im Folgenden anhand der beiliegenden Figuren näher erläutert. Es zeigen

Fig. 1    ein Blockschaltbild eines Ausführungsbeispiels der vorliegenden Erfindung;

Fig. 2    ein schematisches Szenario zur Verdeutlichung der Positionsbestimmung gemäß einem Ausführungsbeispiel;

Fig. 3    ein weiteres schematisches Szenario zur Verdeutlichung der Positionsbestimmung gemäß einem anderen Ausführungsbeispiel;

Fig. 4    eine beispielhafte Darstellung verschiedener Empfangspegel;

Fig. 5    eine Tabelle, die eine Gewichtung verschiedener Empfangspegel in einem Ausführungsbeispiel der vorliegenden Erfindung verdeutlicht; und

Fig. 6    ein schematisches Szenario zur Verdeutlichung einer Alarmierung einer Rettungsleistelle in der konventionellen Technik.

Es wird an dieser Stelle darauf hingewiesen, dass in der folgenden Beschreibung die Begriffe Sende-/Empfangsvorrichtung, Mobilfunkendgerät, Mobilfunktelefon, Mobilfunkgerät, Teilnehmerstation und Mobilstation synonym verwendet werden und diese Begriffe ein mobiles Gerät bezeichnen, dessen Position bestimmt wird. Als Basisstation oder Basisstations-Sende-Empfänger wird allgemein eine Funkstation bezeichnet, die entweder fest in einer Netzwerkinfrastruktur installiert ist oder zumindest eine bekannte Position aufweist und mit einem Mobilfunkendgerät kommunizieren kann. In den im Folgenden beschriebenen Ausführungsbeispielen kann eine Basisstation oder ein Basisstations-Sende-Empfänger auch durch ein Mobilfunkendgerät realisiert sein, sofern dessen Position bekannt ist. Beispielsweise könnte dies ein Mobilfunkendgerät sein, das einen integrierten GPS-Empfänger aufweist oder mit einem solchen in seiner Nähe kommuniziert, z.B. in einem Kraftfahrzeug.

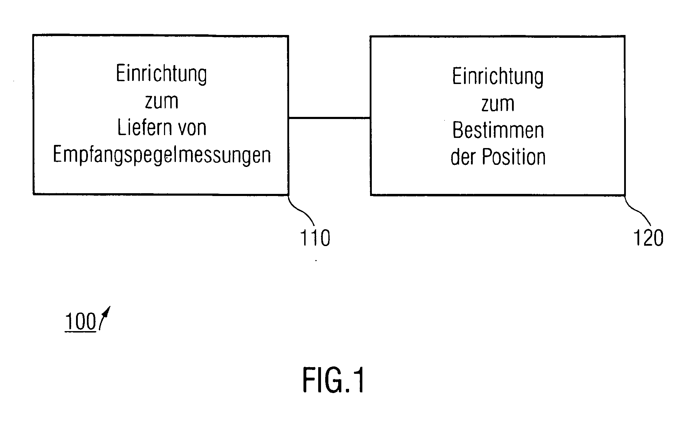

Fig. 1 zeigt ein Blockschaltbild eines Ausführungsbeispiels einer Vorrichtung 100 zur Positionsbestimmung eines Mobilfunkendgerätes. Die Vorrichtung umfasst eine Einrichtung 110 zum Liefern von Empfangspegelmessungen einer Mehrzahl von Basisstations-Sende-Empfängern, wobei ein Basisstations-Sende-Empfänger eine Basisstations-Sende-Empfänger-Position aufweist. Ferner umfasst die Vorrichtung 100 zur Positionsbestimmung eine Einrichtung 120 zum Bestimmen der Position des Mobilfunkendgerätes, basierend auf einer Kombination der Basisstations-Sende-Empfänger-Positionen.

Die Kombination der Basisstations-Sende-Empfänger-Positionen kann in Ausführungsbeispielen gemäß einer Gewichtungsinformation erfolgen, wobei die Gewichtungsinformation von der jeweiligen Empfangspegelmessung abhängt. Die Gewichtungsinformationen können beispielsweise so von den Empfangspegelmessungen abhängen, dass eine Position eines Basisstations-Sende-Empfängers, der einen hohen Wert bei der Empfangspegelmessung liefert, stärker die Positionsschätzung des Mobilfunkendgerätes beeinflusst, als eine Position eines Basisstations-Sende-Empfängers, der einen niedrigen Wert bei der Empfangspegelmessung liefert. Ferner kann in einem Ausführungsbeispiel die Einrichtung 110 zum Liefern von Empfangspegelmessungen ausgebildet sein, um als Empfangspegelmessung einen Wert zu liefern, der auf die Sendeleistung eines Basisstations-Sende-Empfängers normiert ist. In diesem Ausführungsbeispiel korrespondiert die Empfangspegelmessung zu einem Pfadverlust oder einer Dämpfung zwischen einem Mobilfunkendgerät und dem jeweiligen Basisstations-Sende-Empfänger.

Beispielsweise kann die Einrichtung 120 zum Bestimmen der Position des Mobilfunkendgerätes ausgebildet sein, um eine Koordinate der Position des Mobilfunkendgerätes gemäß

$$x_{MS} = \frac{1}{N_{BTS}} \sum_{i=1}^{N_{BTS}} g_{i,x} x_{BTSi} \quad (1)$$

worin $x_{MS}$ die Koordinate der Position des Mobilfunkendgerätes repräsentiert, $N_{BTS}$ die Anzahl der berücksichtigten Basisstations-Sende-Empfänger darstellt, $g_{i,x}$ der Gewichtungsfaktor des Basisstations-Sende-Empfängers i und $x_{BTSi}$ die entsprechende Koordinate der Position des Basisstations-Sende-Empfängers i ist, bestimmt werden. Die Koordinate x repräsentiert in dem obigen Beispiel eine beliebige Koordinate.

In einem anderen Ausführungsbeispiel ist die Einrichtung 120 zum Bestimmen der Position des Mobilfunkendgerätes ausgebildet, um die Position des Mobilfunkendgerätes gemäß zweier (x, y) oder dreier (x, y, z) Raumkoordinaten zu bestimmen, wo beispielsweise die x-Koordinate gemäß der Gleichung 1, entsprechend eine y-Koordinate gemäß

$$y_{MS} = \frac{1}{N_{BTS}} \sum_{i=1}^{N_{BTS}} g_{i,y} y_{BTSi} \quad (2)$$

und eine z-Koordinate gemäß

$$z_{MS} = \frac{1}{N_{BTS}} \sum_{i=1}^{N_{BTS}} g_{i,z} z_{BTSi} \quad (3)$$

berechnet werden können.

Ausführungsbeispiele der vorliegenden Erfindung bieten nun mehrere Möglichkeiten, um die Gewichtungsfaktoren der unterschiedlichen Koordinaten und Basisstations-Sende-Empfänger-Positionen zu wählen. In einem Ausführungsbeispiel werden die Gewichtungen der einzelnen Koordinaten gleich gewählt, d. h.

$$g_{i,x} = g_{i,y} \qquad , \qquad\qquad\qquad (4)$$

bzw.

$$g_{i,x} = g_{i,y} = g_{i,z} \qquad . \qquad\qquad\qquad (5)$$

In einem weiteren Ausführungsbeispiel können alle Gewichtungsfaktoren gleich gewählt werden, d. h. alle $g_i = 1$.

Eine weitere Möglichkeit besteht darin, die Gewichtungsfaktoren der Basisstations-Sende-Empfänger-Positionen gemäß ihren Empfangspegelmessungen abwärts mit konstanten Differenzen zwischen den einzelnen Gewichtungen zu wählen. Alternativ können die Verhältnisse der Gewichtungsfaktoren der einzelnen Basisstations-Sende-Empfänger-Positionen gemäß den Verhältnissen der Empfangspegelmessungen gewählt werden. In einem weiteren Ausführungsbeispiel kann für jede Empfangspegelmessung eines Basisstations-Sende-Empfängers eine Wahrscheinlichkeitsdichte einer Position des Mobilfunkendgerätes gemäß einem Ausbreitungsmodell bestimmt werden, und die Position des Mobilfunkendgerätes aus einer Überlagerung der Wahrscheinlichkeitsdichten für die beteiligten Basisstations-Sende-Empfänger bestimmt werden.

In weiteren Ausführungsbeispielen ist die Einrichtung 120 zum Bestimmen der Position des Mobilfunkendgerätes ausgebildet, um Informationen über in der Vergangenheit liegende Empfangspegelmessungen oder Positionen des Mobilfunkendgerätes zum Bestimmen der aktuellen Position des Mobilfunkendgerätes zu berücksichtigen. Ferner kann in Ausführungsbeispielen der vorliegenden Erfindung eine Geschwindigkeit des Mobilfunkendgerätes berücksichtigt werden. In weiteren Ausführungsbeispielen kann die Position des Mobilfunkendgerätes durch eine entsprechend ausgebildete Einrichtung 120 zum Bestimmen der Position des Mobilfunkendgerätes relativ zu einer bekannten Position bestimmt werden, was beispielsweise durch Empfangspegeländerungen geschehen kann. Es werden dann relative Empfangspegelmessungen oder Empfangspegeländerungen von der Einrichtung 110 zum Liefern der Empfangspegelmessung bestimmt.

Ausführungsbeispiele der vorliegenden Erfindung berücksichtigen beispielsweise GSM-Basisstations-Sende-Empfänger, UMTS-Basisstations-Sende-Empfänger, WLAN-Access Points oder auch Bluetooth-Sende-Empfänger, wobei prinzipiell auch Basisstations-Sende-Empfänger die in unterschiedlichen Frequenzbändern operieren, berücksichtigt werden können. Ferner können in Ausführungsbeispielen der vorliegenden Erfindung auch Empfangspegelmessungen anderer Mobilfunkendgeräte berücksichtigt werden, deren Position beispielsweise bekannt ist oder mitgeteilt wird, so dass auch diese erfindungsgemäß als Basisstations-Sende-Empfänger fungieren können. Auch sind Ausführungsbeispiele der vorliegenden Erfindung nicht auf derzeitige Mobilfunkstandards beschränkt, es können alle erdenklichen heutigen und auch zukünftigen Systeme und HF-Quellen erfasst werden, um eine möglichst genaue Ermittlung einer Position eine Mobilfunkendgerätes zu ermöglichen.

Ausführungsbeispiele der vorliegenden Erfindung erzielen ferner eine Verbesserung der Genauigkeit, wenn zusätzliche Informationen ausgewertet werden, die in dem Mobilfunkendgerät vorliegen, dazu gehören beispielsweise auch der Wert des Timing Advance in GSM-Netzen und TDD-UMTS-Netzen (TDD = Time Division Duplex). Beispielsweise in FDD-UMTS-Netzen (FDD = Frequency Division Duplex) kann im Rahmen einer Empfangspegelmessung auch eine Laufzeit der Signale zwischen Basisstations-Sende-Empfänger (Node B) und Mobilfunkendgerät bestimmt werden. In GSM-Netzen, UMTS-Netzen und auch anderen Mobilfunknetzen sind die Basisstations-Sende-Empfänger eindeutig bezeichnet und Empfangspegelmessungen werden beispielsweise von bis zu sechs oder mehr benachbarten Basisstations-Sende-Empfängern ermittelt. Diese Netze bieten ferner die Möglichkeit, die Anzahl der zu bestimmenden Empfangsleistungen oder Empfangspegelmessungen zu konfigurieren, beispielsweise in einem sogenannten "Monitored Set". Dieser Mechanismus ist in den genannten Standards bereits implementiert, so dass diese ohnehin gemessen und im Mobilfunktelefon gespeichert werden können.

Ausführungsbeispiele der vorliegenden Erfindung berücksichtigen ferner Informationen über andere Netze, die das Mobilfunkendgerät empfangen kann, wie zum Beispiel Informationen über Empfangspegel von Basisstations-Sende-Empfängern anderer Netze, das heißt anderer Netzbetreiber, anderer Frequenzen, anderer Technologien oder andere empfangbare Funksignale, wie beispielsweise von WLAN-Hotspots oder auch von Bluetooth-Sende-Empfängern. Eine zeitliche Aufzeichnung der genannten Werte und der Basisstations-Sende-Empfänger, in die das Mobilfunktelefon eingebucht war, ermöglicht ferner eine genauere Bestimmung der Position des Mobilfunkendgerätes. Mit diesen Werten kann beispielsweise eine Spur der Bewegung des Mobilfunktelefons innerhalb der Netzinfrastruktur aufgezeichnet werden.

Gemäß Ausführungsbeispielen der vorliegenden Erfindung werden diese Informationen, oder auch ein Teil dieser Informationen, im Fall eines Lokalisierungswunsches, insbesondere im Fall eines Notrufes, von dem Mobilfunktelefon oder dem Mobilfunkendgerät an eine Stelle übermittelt, die Informationen über den Aufbau der Netzwerkinfrastruktur hat. Diese Übermittlung kann beispielsweise im Falle eines Notrufs automatisch vom Mobilfunktelefon vorgenommen werden, das anhand der gewählten Nummer oder einer Notruftaste den Notruf erkennt. Gerade im Bereich des Straßenverkehrs wäre es auch denkbar, einen Notruf anhand eines Notrufsensors zu erkennen, beispielsweise könnte ein Mobilfunkendgerät an das Bordnetz eines Kraftfahrzeugs gekoppelt sein, wo das Auslösen eines Airbags automatisiert einen Notruf auslöst. Die Übermittlung der Notfalldaten kann beispielsweise durch Übertragung einer oder mehrerer Kurzmitteilungen (SMS = Short Message Service) erfolgen. Die Notfalldaten sind in Ausführungsbeispielen der vorliegenden Erfindung nicht auf Informationen über Positionsdaten beschränkt, es ist erfindungsgemäß auch denkbar, zusätzliche Informationen zu übertragen, wie beispielsweise Vitalparameter eines Patienten, der in Not geraten ist.

Wichtige Informationen der Netzwerkinfrastruktur, die zur Bestimmung der Position des Mobilfunkendgerätes ausgewertet werden können, sind die geographische Position der Basisstations-Sende-Empfänger, die das Mobilfunkendgerät standardgemäß in einer Liste der benachbarten Basisstations-Sende-Empfänger (Monitored Set) führt und deren Empfangsleistung oder Empfangspegel dem Mobilfunktelefon bekannt sind. Ferner können zur Bestimmung der Position des Mobilfunkendgerätes die Abstrahlrichtung der Sendeantennen der Basisstations-Sende-Empfänger sowie deren Sendeleistung berücksichtigt werden.

Ferner können Informationen über andere Netzwerkinfrastrukturen berücksichtigt werden, wie beispielsweise eine geographische Position eines Basisstations-Sende-Empfängers von einem anderen empfangbaren Netz, wie z. B. eines WLAN-Hotspots. Es wäre in einem Ausführungsbeispiel auch denkbar, dass das Mobilfunkendgerät eine Information über eine IP-Adresse (IP = Internet Protokoll) übermittelt, aufgrund derer wiederum ein Anschluss, eine Telefonnummer oder eine tatsächliche Adresse und damit die Position des Mobilfunkendgerätes ermittelt werden kann.

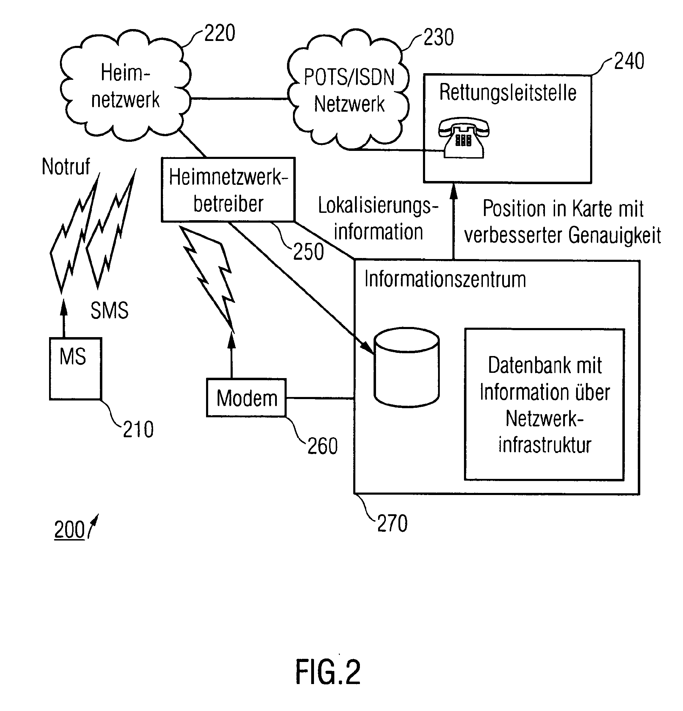

Fig. 2 zeigt eine schematische Darstellung eines Systems 200 zur Alarmierung von Rettungsdiensten gemäß einem Ausführungsbeispiel der vorliegenden Erfindung. Wie bereits anhand der Fig. 6 beschrieben initiiert ein Mobilfunkendgerät 210 einen Notruf (Emergency Call) in seinem Heimnetzwerk 220, welches hier beispielhaft als GSM-Netzwerk 220 angenommen ist. Prinzipiell sind anstatt des Heimnetzwerkes 220 auch andere Netzwerke denkbar, in die das Mobilfunkendgerät beispielsweise auch im Rahmen eines Roaming-Abkommens oder auch über IP (IP = Internet Protocol) eingebunden sein kann.

Zusätzlich zu dem aufgebauten Notruf (Emergency Call) sendet das Mobilfunktelefon oder Mobilfunkendgerät 210 Daten aus, beispielsweise in Form einer Nachricht, die die oben beschriebenen Werte enthält und die über eine SMS (Emergency SMS) realisiert sein kann. Der Notruf der Mobilstation 210 wird dann von deren Heimnetzwerk 220, oder dem Netz, in das die Mobilstation eingebucht ist, beispielsweise über ein weiteres Netzwerk 230, zum Beispiel POTS oder ISDN, an eine Rettungsleitstelle 240 (Emergency Center) weitergeleitet. Die vom Mobilfunkendgerät 210 ausgesendete Nachricht (Emergency SMS) wird über eine Datenverbindung an das Heimnetzwerk 220 übermittelt. Diese Nachricht kann beispielsweise eine oder mehrere Kurzmitteilungen (SMS) umfassen, die dann vom Heimnetzwerk 220 über den Heimnetzwerkbetreiber 250 und ggf über ein geeignetes Sendeempfangsgerät 260 (Modem) an ein Informationszentrum 270 weitergeleitet wird bzw. werden. Das Informationszentrum (IT Center) verfügt in einer Datenbank über Informationen über die Netzinfrastruktur des Heimnetzwerkes 220 sowie über Infrastrukturen anderer Netze, die von anderen Netzwerkbetreibern betrieben werden, die auch über andere Technologien verwirklicht sein können. Die Datenbank im Informationszentrum wird in einem Ausführungsbeispiel regelmäßig von den verschiedenen Netzwerkbetreibern aktualisiert.

Die Informationen aus der Datenbank werden mit Hilfe der beispielsweise mittels einer Kurznachricht übertragenen Informationen ausgewertet, die Position kann dann bestimmt werden und auf einer Karte der Rettungsleitstelle 240 dargestellt werden. Das Mobilfunkendgerät kann dabei automatisch oder auch vom Teilnehmer initiiert, vor oder nach einem Notruf Einbuchvorgänge bei verschiedenen Basisstations-Sende-Empfängern von einem oder von verschiedenen Netzwerkbetreibern vornehmen, die im Notruffall möglich sind und diese zur Verbesserung der Genauigkeit der Positionsbestimmung des Mobilfunkendgerätes zur Verfügung stellen. Ferner kann in einem weiteren Ausführungsbeispiel der vorliegenden Erfindung das Mobilfunkendgerät ausgebildet sein, um sich falls möglich, in eine oder mehrere UMTS-Netze einzubuchen, sowie um Informationen über andere Netzwerke, wie beispielsweise WLAN-Hotspots zu sammeln. Das Mobilfunkendgerät kann ferner Informationen über die jeweilige Netzwerkinfrastruktur sammeln, indem es beispielsweise über einen gewissen Zeitraum hinweg Informationen speichert.

Dabei kann das Mobilfunkendgerät dann solche Werte übermitteln, die aus der nahen Vergangenheit stammen und Auskunft geben können über Positionen, an denen sich das Mobilfunktelefon kurz vor dem Notruf befunden hat. Eine Begrenzung der Menge dieser Werte ist erfindungsgemäß nicht gegeben, wohl aber im Hinblick auf eine einfache Realisierung gegeben. Beispielsweise wäre es denkbar, dass ein Mobilfunkendgerät, dass in der Lage ist beispielsweise über Bluetooth eine Verbindung zu einem anderen Mobilfunkgerät aufzubauen, das über seine genaue Position verfügt und diese im Falle eines Notrufes übermitteln kann denkbar, dass das Mobilfunkendgerät aufgrund der eingeschränkten Reichweite der Bluetooth-Verbindung diese Koordinaten direkt an das Informationszentrum übermittelt.

Die Übermittlung der Informationen an ein Netzbetreiberunabhängiges Informationszentrum hat den Vorteil, dass die Informationen verschiedener Netzbetreiber zur Positionsbestimmung ausgenutzt werden können. Es lässt sich somit eine erhöhte Genauigkeit der Positionsbestimmung erzielen, da mehr Informationen über Netzwerkumgebungen und auch verschiedene Netzwerkinfrastrukturen zur Verfügung stehen, als dies bei einer herkömmlichen, nur auf einer Netzwerkinfrastruktur beruhenden Positionsbestimmung, der Fall wäre.

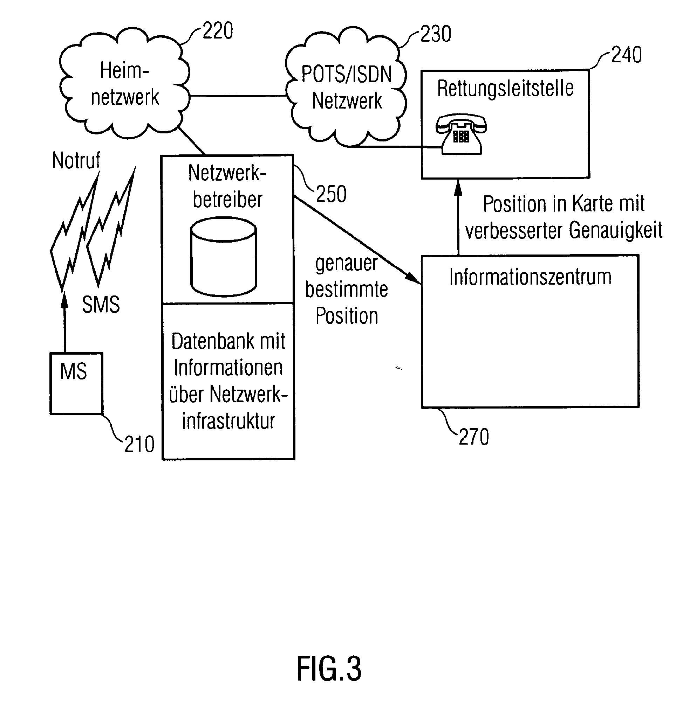

Alternativ kann jedoch die Bestimmung der Information auch vom Netzwerkbetreiber 250 übernommen werden, wie dies beispielhaft in der Fig. 3 dargestellt ist. Die Fig. 3 zeigt ein ähnliches Szenario wie bereits anhand der Fig. 2 beschrieben wurde, wobei gleiche Komponenten gleiche Bezugszeichen aufweisen. Der Unterschied des Szenarios in Fig. 3 im Vergleich zu dem Szenario, das in Fig. 2 dargestellt ist, ist, dass nun der Netzwerkbetreiber 250, der bereits über Informationen über seine eigene Netzinfrastruktur 220 verfügt, die ankommende Nachricht des Mobilfunkendgerätes 210 selbst auswertet und beispielsweise über Location Based Services (LBS) eine genauer bestimmte Position liefern kann, als das bisher der Fall war. In diesem Ausführungsbeispiel wird dann davon ausgegangen, dass der Netzwerkbetreiber Zugriff auf mehrere Netze hat bzw. mehrere Netzwerke betreibt, um die von der Mobilstation 210 übermittelten Informationen entsprechend auswerten zu können.

Ausführungsbeispiele der vorliegenden Erfindung nutzen zur Positionsbestimmung eines Mobilfunkendgerätes Informationen, die dem Mobilfunkendgerät bekannt sind, bzw. von diesen bestimmt werden können und an eine geeigneten Stelle übermittelt werden, die über die Informationen der konventionellen Lokalisierungsverfahren hinausgehen. Die Informationen, die in Ausführungsbeispielen zur Bestimmung der Position eines Mobilfunkendgerätes genutzt werden können beispielsweise auch einen Wert eines Timings Advance in GSM-Netzen und TDD-UMTS-Netzen umfassen. Der Wert des Timing Advance (TA = Timing Advance) stellt in GSM-Netzen ein Maß für die Laufzeit des Signals von einem Basisstations-Sende-Empfänger oder BTS (BTS = Base Transceiver Station) zu einem Mobilfunkendgerät und zurück zur BTS in ganzen Bitperioden $T_b$ dar, wobei auf ganze Bitperioden gerundet wird. Mit 156,25 Bit in einem Zeitschlitz von 15/26ms, ergibt sich die Bitperiode zu

$$T_b = \frac{15ms}{26 \cdot 156,25} = \frac{30ms}{8125} \approx 3,69 \mu s \qquad (6)$$

Es wird angenommen, dass der effektive Abstand zwischen einem Basisstations-Sende-Empfänger und einem Mobilfunkendgerät d sei, es ergibt sich mit der Bitperiode $T_b$ und der Lichtgeschwindigkeit c = 3x10^8 m/s für TA

$$TA = \left[\frac{2 \cdot d}{c \cdot T_b}\right] \approx \left[\frac{d}{554m}\right] \qquad . \qquad (7)$$

Die eckige Klammer [ ] bedeutet hier, dass auf ganze Zahlen gerundet wird. Umgekehrt lässt sich aus TA der effektive Abstand

$$d \approx (TA + 0,5) \cdot 554m \qquad (8)$$

berechnen. Im Falle von GSM-Netzen beträgt die Ungenauigkeit der Quantisierung des TA etwa 277m. Für einen Timing Advance von TA = 1 folgt beispielsweise, dass sich das Mobilfunkendgerät in einem Abstand d von etwa 277m < d < 831m um den Basisstations-Sende-Empfänger befindet. Diese Werte werden beispielsweise durch Reflektionen und Beugungen der elektromagnetischen Wellen beeinflusst, so kann beispielsweise der Pfad einer elektromagnetischen Welle größer werden, als es dem tatsächlichen Abstand zwischen einem Mobilfunkendgerät und einer BTS entspricht, so dass der Abstand d im betrachteten Beispiel auch geringfügig kleiner als 277 m sein kann.

In TDD-UMTS-Netzen wird ein ähnlicher Wert ermittelt. Die Laufzeit der Funksignale zwischen einem Basisstations-Sende-Empfänger in FDD-UMTS-Netzen, in die ein Mobilfunkendgerät eingebucht ist, kann beispielsweise durch das folgende Verfahren bestimmt werden. Der Basisstations-Sende-Empfänger sendet ein erstes Funksignal und merkt sich, wann das erste Funksignal gesendet wurde. Die Mobilstation empfängt von diesem ersten Funksignal in der Regel mehrere durch Mehrwegeausbreitung hervorgerufene Echos zu unterschiedlichen Zeitpunkten. Das Mobilfunkendgerät sendet nach einer bestimmten Zeit $T_{TX-RX}$ eine Empfangsbestätigung an den Basisstations-Sende-Empfänger. Diese Zeitspanne, die zwischen dem Zeitpunkt des Empfangs des ersten Echos des ersten Funksignals bis zum Zeitpunkt des Sendens eines Referenzsignalwertes der Empfangsbestätigung liegt, kann gemessen werden. Die Empfangsbestätigung kann dann eine Information über den Wert von $t_{TX-RX}$ enthalten. Der Basisstations-Sende-Empfänger empfängt nun das Funksignal der Empfangsbestätigung durch in der Regel mehrere durch Mehrwegeausbreitung hervorgerufene Echos zu unterschiedlichen Zeitpunkten. Der Basisstations-Sende-Empfänger kann nun die Zeitdifferenz zwischen dem Empfang des ersten Echos des Referenzsignalwertes und dem Senden des ursprünglichen ersten Funksignals bestimmen. Die doppelte Laufzeit der Funksignale kann durch Abzug von $t_{TX-RX}$ ermittelt werden. Ferner kann in Ausführungsbeispielen der vorliegenden Erfindung die Laufzeit der Funksignale der Mobilfunkendgeräte durch ein weiteres Funksignal mitgeteilt werden, so dass dieses dem Mobilfunkendgerät dann vorliegt.

Ausführungsbeispiele der vorliegenden Erfindung berücksichtigen Empfangspegelmessungen zur Bestimmung der Position eines Mobilfunkendgerätes. Beispielsweise werden in GSM-Netzen in der Mobilstation empfangene Signalstärken, die als "RXLEV" bezeichnet werden, von bis zu sieben Basisstations-Sende-Empfängern (BTS) gemessen. Diese Signalstärken liegen in dem Mobilfunkendgerät als quantifizierte Werte vor und werden auch als RSSI (RSSI = Receiver Signal Strength Indicator) bezeichnet. Mit der logarithmischen Größe

$$p_e / dBm = 10 \cdot \lg(P_e / mW) \qquad (9)$$

der empfangenen Signalleistung $P_e$, gilt für den Zusammenhang zwischen Signalleistung und RSSI

$$RSSI = \left\{ \begin{bmatrix} 0 \\ 110 + p_e / dBm \\ 63 \end{bmatrix} \begin{array}{l} , wenn\ p_e \leq -110 dBm \\ , wenn -110 dBm < p_e \leq -47 dBm \\ , wenn\ p_e > -47 dBm \end{array} \right. \qquad (10)$$

Die unten geöffnete Klammer ⌈ ⌉ bezeichnet, dass der darin befindliche Wert aufgerundet werden soll. Beispielsweise bei RSSI = 62 liegt die logarithmische Empfangsleistung $p_e$ des Kontrollkanals BCCH (BCCH = Broadcast Control Channel) eines bedienenden Basisstations-Sende-Empfängers in einem Bereich zwischen -47dBm < $p_e$ ≤ -46dBm. Bei einer gleichverteilten Wahrscheinlichkeit ist in diesem Fall der Erwartungswert der logarithmischen Empfangsleistung zu $p_e$ = -46,5 dBm anzunehmen.

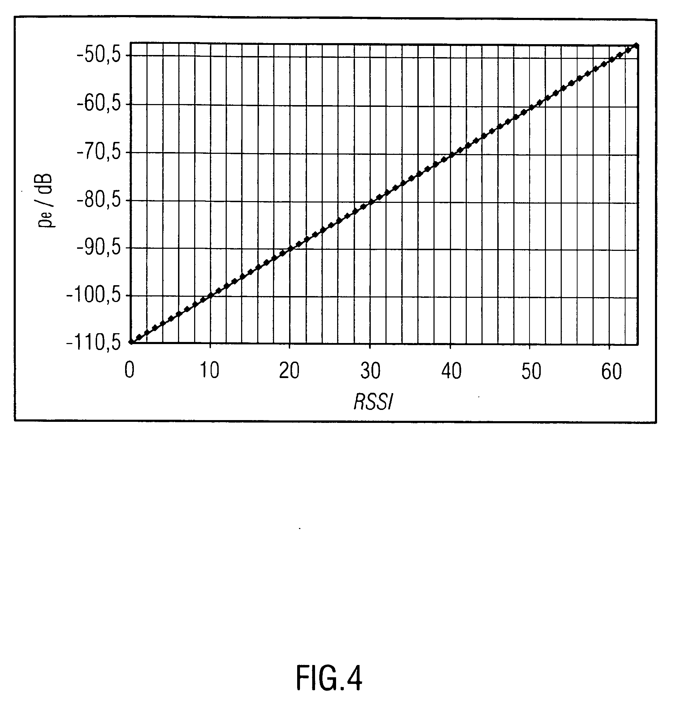

Die Fig. 4 zeigt beispielhaft eine Zuordnung zwischen Empfangsleistungen und RSSI, wobei in der Fig. 4 auf der Abzisse die RSSI-Werte aufgetragen sind und auf der Ordinate die logarithmische Empfangsleistung $p_e$ in dB. Die Fig. 4 zeigt eine lineare Zuordnung unter Verwendung der beschriebenen Skalen.

Auf Basis der bekannten Werte kann nun eine Position, beispielsweise nach zwei Raumrichtungen x und y $(x_{MS}, y_{MS})$ des Mobilfunkendgerätes aufgelöst, aus den Koordinaten der Basisstation $(x_{BTSi}, y_{BTSi})$ wie folgt bestimmt werden,

$$x_{MS} = \frac{1}{N_{BTS}} \sum_{i=1}^{N_{BTS}} g_{i,x} x_{BTSi}$$

$$, \qquad (11)$$

$$y_{MS} = \frac{1}{N_{BTS}} \sum_{i=1}^{N_{BTS}} g_{i,y} y_{BTSi}$$

wobei die $g_{i,x}$, $g_{i,y}$ die Gewichtungsfaktoren für die x- und y-Koordinaten eines i-ten Basisstations-Sende-Empfängers sind. Die Gewichtungsfaktoren können in einem Ausführungsbeispiel beispielsweise in dem Informationszentrum aus den von dem Mobilfunkendgerät ermittelten und übertragenen Daten bestimmt werden.

In einem Ausführungsbeispiel gilt für die Gewichtungen $g_{i,x}$ = $g_{i,y}$. In anderen Ausführungsbeispielen, zum Beispiel wenn das Mobilfunkendgerät Daten aus Regionen an den Grenzen eines Gebietes eines Netzbetreibers liefert oder z.B. an Küsten, etc., können die Gewichtungsfaktoren der einzelnen Raumrichtungen auch unterschiedlich gewählt werden.

In einem weiteren Ausführungsbeispiel sind alle Gewichtungsfaktoren $g_{i,x}$, $g_{i,y}$ gleich gewählt. Es wird somit der Schwerpunkt, der durch die Basisstations-Sende-Empfänger aufgebauten Fläche bestimmt mit $g_{i,x} = g_{i,y} = 1$.

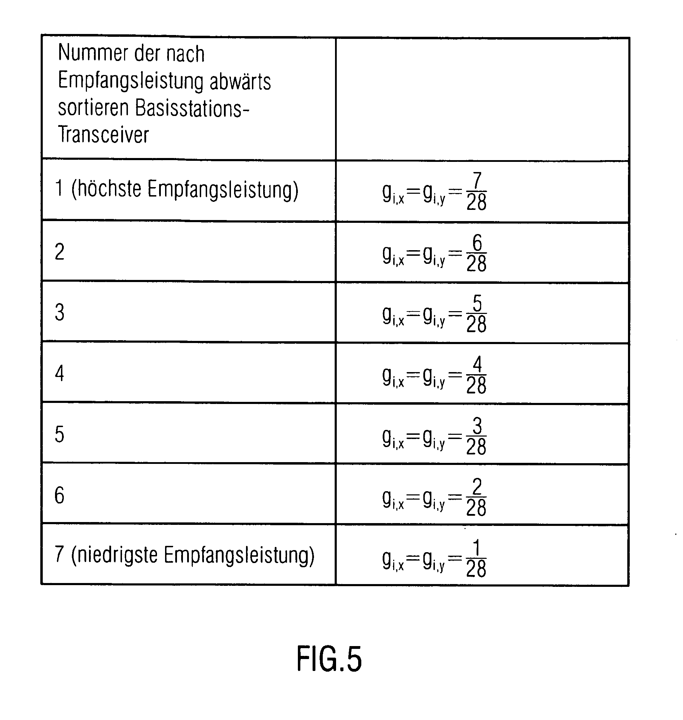

In einem weiteren Ausführungsbeispiel werden die Gewichtungsfaktoren $g_{i,x}$, $g_{i,y}$ beispielsweise in der Reihenfolge der Empfangspegel oder Empfangsleistungen abwärts mit konstanten Differenzen zwischen den einzelnen Gewichtungen gewählt. Fig. 5 zeigt ein Beispiel eines solchen Ausführungsbeispiels, bei dem davon ausgegangen wird, dass Empfangspegel von 7 Basisstations-Sende-Empfängern vorhanden sind. Die Tabelle in der Fig. 5 zeigt auf der linken Seite die Nummer der nach der Empfangsleistung oder des Empfangspegels abwärts sortierten Basisstations-Sende-Empfänger und in der rechten Spalte die zugehörigen Gewichtungsfaktoren.

In einem anderen Ausführungsbeispiel können die Gewichtungsfaktoren auch aus den gemessenen Empfangsleistungen oder Empfangspegeln direkt bestimmt werden. Je nach zugrundegelegtem Ausbreitungsmodell, bedeutet eine Veränderung der Empfangsleistung um 1 dB eine Veränderung des Abstands zwischen Basisstations-Sende-Empfänger und Mobilfunkendgerät um den Faktor 1,06 bis 1,13. Das Ausbreitungsmodell und somit auch dieser Faktor können an das jeweilige Szenario entsprechend angepasst werden. Die Gewichtungsfaktoren der schwächer empfangbaren Basisstations-Sende-Empfänger werden dann um dasselbe Maß reduziert, wie deren Empfangspegel.

Unter in Bezugnahme eines Ausbreitungsmodells, lassen sich aus den daraus gewonnenen Vorhersagen für die Empfangspegel in der Umgebung der Basisstations-Sende-Empfänger Wahrscheinlichkeitsdichten bestimmen, mit der sich ein Mobilfunkendgerät an einer bestimmten Stelle befindet. Aus Überlagerung der Wahrscheinlichkeitsdichten der einzelnen, durch das Mobilfunkendgerät empfangbaren Basisstations-Sende-Empfängern, kann die gesuchte Position des Mobilfunkendgerätes in einem anderen Ausführungsbeispiel ermittelt werden.

Wenn die Mobilstation oder das Mobilfunkendgerät Informationen über in der Vergangenheit liegende Messwerte liefert, kann für jeden zurückliegenden Zeitpunkt, für den Empfangspegelmessungen vorliegen, die Position der Mobilstation bestimmt werden. Wegen der zu erwartenden niedrigen Bewegungsgeschwindigkeit eines Mobilfunkendgerätes werden die wahren Positionen zeitlich benachbarter Empfangspegelmessungen nicht weit auseinander liegen. Durch eine geeignete Mittelwertbildung der berechneten Positionen, unter Berücksichtigung der Bestimmung einer Bewegungsgeschwindigkeit lässt sich die wahre Position in einem weiteren Ausführungsbeispiel genauer ermitteln, als wenn nur ein Satz von Empfangspegelmessungen zu einem Zeitpunkt ausgewertet wird.

Andere Ausführungsbeispiele erzielen eine zusätzliche Erhöhung der Genauigkeit, wenn lediglich eine Positionsbestimmung relativ zu einer bekannten Position vorgenommen wird, zu der entsprechende Empfangspegelmesswerte des Mobilfunkendgerätes vorliegen. Wahlweise kann das Mobilfunkendgerät in einem solchen Ausführungsbeispiel auch Empfangspegeländerungen übertragen, wie bereits oben erwähnt.

Ausführungsbeispiele der vorliegenden Erfindung bieten somit den Vorteil, dass eine Position eines Mobilfunkendgerätes innerhalb der Mobilfunknetze genauer bestimmt werden kann, und schaffen somit insbesondere in einer Notfallsituation den Vorteil, dass Rettungskräfte schneller an ihren Einsatzort gelangen.

Insbesondere wird darauf hingewiesen, dass abhängig von den Gegebenheiten das erfindungsgemäße Schema auch in Software implementiert werden kann. Die Implementation kann auf einem digitalen Speichermedium, insbesondere einer Diskette, einer CD oder einer DVD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. Mit anderen Worten ausgedrückt, kann die Erfindung somit als ein Computerprogramm mit einem Programmcode zur Durchführung des Verfahrens realisiert werden, wenn das Computerprogrammprodukt auf einen Computer abläuft.

Bezugszeichenliste

| | |
|---|---|
| 100 | Einrichtung zur Positionsbestimmung |
| 110 | Einrichtung zum Liefern von Empfangspegelmessungen |
| 120 | Einrichtung zum Bestimmen der Position |
| | |
| 200 | System |
| 210 | Mobilstation |
| 220 | Heimnetzwerk |
| 230 | POTS/ISDN |
| 240 | Rettungsleitstelle |
| 250 | Heimnetzwerkbetreiber |

| 260 | Modem |
|---|---|
| 270 | Informationszentrum |

| 610 | Mobilstation |
|---|---|
| 620 | PLMN |
| 630 | POTS/ISDN |
| 640 | Emergency Center |
| 650 | PLMN-Operator |
| 660 | Informationszentrum |

**Patentansprüche**

1. Vorrichtung (100) zur Positionsbestimmung eines Mobilfunkendgerätes mit folgenden Merkmalen:

   einer Einrichtung (110) zum Liefern von Empfangspegelmessungen einer Mehrzahl von Basisstations-Sende-Empfängern, wobei ein Basisstations-Sende-Empfänger eine Basisstations-Sende-Empfänger-Position aufweist; und
   einer Einrichtung (120) zum Bestimmen der Position des Mobilfunkendgerätes basierend auf einer Kombination der Basisstations-Sende-Empfänger-Positionen.

2. Vorrichtung (100) gemäß Anspruch 1, bei der die Einrichtung (120) zum Bestimmen der Position ausgebildet ist, um die Kombination der Basisstations-Sende-Empfänger-Positionen gemäß Gewichtungsinformationen, die von den Empfangspegelmessungen abhängen, durchzuführen.

3. Vorrichtung (100) gemäß Anspruch 2, bei der die Gewichtungsinformationen derart von den Empfangspegelmessungen abhängen, dass eine Position eines Basisstations-Sende-Empfängers, der einen hohen Wert bei der Empfangspegelmessung liefert, stärker die Position des Mobilfunkendgerätes beeinflusst als eine Position eines Basisstations-Sende-Empfängers, der einen niedrigen Wert bei der Empfangspegelmessung liefert.

4. Vorrichtung (100) gemäß einem der Ansprüche 1 bis 3, bei der die Einrichtung (110) zum Liefern der Empfangspegelmessungen ausgebildet ist, um als Empfangspegelmessung einen Wert zu liefern, der auf eine Sendeleistung eines Basisstations-Sende-Empfängers normiert ist.

5. Vorrichtung (100) gemäß einem der Ansprüche 1 bis 4, bei der die Einrichtung (120) zum Bestimmen der Position des Mobilfunkendgerätes ausgebildet ist, um eine Koordinate des Mobilfunkendgerätes gemäß

$$x_{MS} = \frac{1}{N_{BTS}} \sum_{i=1}^{N_{BTS}} g_{i,x} x_{BTSi} ,$$

   wobei $x_{MS}$ der zu bestimmenden Koordinate entspricht, $N_{BTS}$ gleich der Anzahl der betrachteten Basisstations-Sende-Empfängern ist, $g_{i,x}$ der zu einer Raumrichtung x und dem Basisstations-Sende-Empfänger i zugehörige Gewichtungsfaktor und $x_{BTSi}$ die zugehörige Koordinate des Basisstations-Sende-Empfängers, zu bestimmen.

6. Vorrichtung (100) gemäß Anspruch 5, bei der die Einrichtung (120) zum Bestimmen der Position des Mobilfunkendgerätes ausgebildet ist, und die Position des Mobilfunkendgerätes in zwei (x, y) oder drei Raumkoordinaten (x, y, z) zu bestimmen.

7. Vorrichtung (100) gemäß Anspruch 6, bei der die Einrichtung (120) zum Bestimmen der Position des Mobilfunkendgerätes ausgebildet ist, um Gewichtungsfaktoren unterschiedlicher Raumrichtungen eines Basisstations-Sende-Empfängers gleich zu wählen, $g_{i,x} = g_{i,y}$ bzw. $g_{i,x} = g_{i,y} = g_{i,z}$.

8. Vorrichtung (100) gemäß einem der Ansprüche 5 bis 7, bei der die Einrichtung (120) zum Bestimmen der Position des Mobilfunkendgerätes ausgebildet ist, um alle Gewichtungsfaktoren gleich zu wählen.

**9.** Vorrichtung (100) gemäß einem der Ansprüche 5 bis 8, bei der die Einrichtung (120) zum Bestimmen der Position des Mobilfunkendgerätes ausgebildet ist, um die Gewichtungsfaktoren der Basisstations-Sende-Empfänger-Positionen gemäß ihren Empfangspegelmessungen abwärts mit konstanten Differenzen zwischen den einzelnen Gewichtungen zu wählen.

**10.** Vorrichtung (100) gemäß einem der Ansprüche 5 bis 9, bei der die Einrichtung (120) zum Bestimmen der Position des Mobilfunkendgerätes ausgebildet ist, um Gewichtungsverhältnisse der einzelnen Basisstations-Sende-Empfänger-Positionen gemäß den Verhältnissen der Empfangspegelmessungen zu wählen.

**11.** Vorrichtung (100) gemäß einem der Ansprüche 1 bis 10, bei der die Einrichtung (120) zum Bestimmen der Position des Mobilfunkendgerätes ausgebildet ist, um eine Wahrscheinlichkeitsdichte einer Position des Mobilfunkendgerätes gemäß einem Ausbreitungsmodell für einen Basisstations-Sende-Empfänger zu bestimmen, und die Position des Mobilfunkendgerätes aus einer Überlagerung der Wahrscheinlichkeitsdichten für die Basisstations-Sende-Empfänger zu bestimmen.

**12.** Vorrichtung (100) gemäß einem der Ansprüche 1 bis 11, bei der die Einrichtung (120) zum Bestimmen der Position des Mobilfunkendgerätes ausgebildet ist, um Informationen über in der Vergangenheit liegende Empfangspegelmessungen zum Bestimmen der Position des Mobilfunkendgerätes zu berücksichtigen.

**13.** Vorrichtung (100) gemäß einem der Ansprüche 1 bis 12, bei der die Einrichtung (120) zum Bestimmen der Position des Mobilfunkendgerätes ausgebildet ist, um eine Bewegungsgeschwindigkeit des Mobilfunkendgerätes bei der Bestimmung der Position zu berücksichtigen.

**14.** Vorrichtung (100) gemäß einem der Ansprüche 1 bis 13, bei der die Einrichtung (120) zum Bestimmen der Position des Mobilfunkendgerätes ausgebildet ist, um die Position des Mobilfunkendgerätes relativ zu einer bekannten Position zu bestimmen.

**15.** Vorrichtung (100) gemäß einem der Ansprüche 1 bis 14, bei der die Einrichtung (110) zum Liefern von Empfangspegelmessungen ausgebildet ist, um relative Empfangspegelmessungen oder Empfangspegeländerungen zu messen und ferner die Einrichtung (120) zum Bestimmen der Position des Mobilfunkendgerätes ausgebildet ist, um die Position des Mobilfunkendgerätes basierend auf den relativen Empfangspegelmessungen oder Empfangspegeländerungen vorzunehmen.

**16.** Vorrichtung (100) gemäß einem der Ansprüche 1 bis 15, bei der die Einrichtung (110) zum Liefern der Empfangspegelmessungen ausgebildet ist, um Empfangspegelmessungen von GSM-Basisstations-Sende-Empfängern, UMTS-Basisstations-Sende-Empfängern, WLAN-Basisstations-Sende-Empfängern oder Bluetooth-Sende-Empfängern zu liefern.

**17.** Vorrichtung (100) gemäß einem der Ansprüche 1 bis 16, bei der die Einrichtung (110) zum Liefern der Empfangspegelmessungen ausgebildet ist, um Empfangspegelmessungen von Basisstations-Sende-Empfängern, die in verschiedenen Frequenzbändern operieren, zu liefern.

**18.** Vorrichtung (100) gemäß einem der Ansprüche 1 bis 17, bei der die Einrichtung (110) zum Liefern der Empfangspegelmessungen ausgebildet ist, um zusätzlich zu den Empfangspegelmessungen Signallaufzeiten zu den Sendern zu liefern und die Einrichtung (120) zum Bestimmen der Position des Mobilfunkendgerätes ausgebildet ist, um die Signallaufzeiten bei dem Bestimmen der Position des Mobilfunkendgerätes zu berücksichtigen.

**19.** Basisstations-Sende-Empfänger, der eine Vorrichtung (100) gemäß einem der Ansprüche 1 bis 18 aufweist.

**20.** Netzwerkelement eines Mobilfunknetzes, das eine Vorrichtung (100) gemäß einem der Ansprüche 1 bis 18 aufweist.

**21.** Mobilfunkendgerät, das eine Vorrichtung (100) gemäß einem der Ansprüche 1 bis 18 aufweist.

**22.** Mobilfunkendgerät gemäß Anspruch 21, das ferner ausgebildet ist, um mit einem Mobilfunknetzwerk zu kommunizieren und um Funkdaten an das Mobilfunknetz zu übermitteln, wobei das Mobilfunkendgerät ferner eine Einrichtung zum Detektieren einer Notfallsituation aufweist; eine Einrichtung zum Bereitstellen von Notfalldaten umfasst, die von einer geografischen Position des Mobilfunkendgerätes abhängen, wobei die Einrichtung zum Bereitstellen ausgebildet ist, um unabhängig von einer detektierten Notfallsituation die Notfalldaten zu erfassen und zu aktualisieren, oder um ansprechend auf eine detektierte Notfallsituation die Notfalldaten zu erfassen;
eine Einrichtung zum Aufbauen einer Datenverbindung zu einem Informationszentrum aufweist, die ausgebildet ist, um ansprechend auf eine detektierte Notfallsituation die Datenverbindung aufzubauen; und
eine Einrichtung zur Übermittlung der Notfalldaten umfasst, die von der Einrichtung zum Bereitstellen der Notfalldaten bereitgestellt werden, über die Datenverbindung an das Informationszentrum.

23. Mobilfunkendgerät gemäß einem der Ansprüche 21 oder 22, das ferner
eine Einrichtung zum Erfassen von Signalen eines Senders eines Mobilfunknetzwerkes und wenigstens eines weiteren Senders aufweist, der sich im Empfangsbereich des Mobilfunkendgerätes befindet;
eine Einrichtung zum Bereitstellen von Priorisierungsinformationen für den Sender des Mobilfunknetzwerks und den wenigstens einen weiteren Sender umfasst, wobei die Priorisierungsinformationen so ausgebildet sind, dass eine höhere Priorität zugeordnet wird für einen Sender, der eine genauere Lokalisierung des Mobilfunkendgerätes erlaubt im Vergleich zu einem Sender, der eine ungenauere Lokalisierung des Mobilfunkendgerätes erlaubt;
eine Einrichtung zum Auswählen von Lokalisierungsdaten des Senders aufweist, der eine höhere Priorität hat; und
eine Einrichtung zum Senden der Lokalisierungsdaten oder einer aus den Lokalisierungsdaten bestimmten Position aufweist.

24. Verfahren zur Positionsbestimmung eines Mobilfunkendgerätes, mit folgenden Schritten:

Liefern von Empfangspegelmessungen einer Mehrzahl von Basisstations-Sende-Empfängern, wobei ein Basisstations-Sende-Empfänger eine Basisstations-Sende-Empfänger-Position aufweist;
Bestimmen der Position des Mobilfunkendgerätes basierend auf einer Kombination der Basisstations-Sende-Empfänger-Positionen.

25. Computerprogramm mit einem Programmcode zur Durchführung des Verfahrens gemäß Anspruch 24, wenn der Programmcode auf einem Computer abläuft.

| Einrichtung zum Liefern von Empfangspegelmessungen | | Einrichtung zum Bestimmen der Position |

110                                    120

100↗

FIG.1

FIG.2

FIG.3

FIG.4

| Nummer der nach Empfangsleistung abwärts sortieren Basisstations-Transceiver | |
|---|---|
| 1 (höchste Empfangsleistung) | $g_{i,x}=g_{i,y}=\dfrac{7}{28}$ |
| 2 | $g_{i,x}=g_{i,y}=\dfrac{6}{28}$ |
| 3 | $g_{i,x}=g_{i,y}=\dfrac{5}{28}$ |
| 4 | $g_{i,x}=g_{i,y}=\dfrac{4}{28}$ |
| 5 | $g_{i,x}=g_{i,y}=\dfrac{3}{28}$ |
| 6 | $g_{i,x}=g_{i,y}=\dfrac{2}{28}$ |
| 7 (niedrigste Empfangsleistung) | $g_{i,x}=g_{i,y}=\dfrac{1}{28}$ |

FIG.5

**FIG.6 (Stand der Technik)**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10345224
- WO 9815149 A